# EUROPEAN PATENT SPECIFICATION

(11) **EP 0 864 882 B1**
(45) Date of publication and mention of the grant of the patent: **09.07.2003**
(21) Application number: 98200712.2
(22) Date of filing: 06.03.1998
(51) Int. Cl.: G01V 1/28

(54) **Method for estimating or simulating parameters of a stratum structure**
Verfahren zur Schätzung oder Simulation von Parameter einer statifizierten Struktur.
Procédé pour estimer ou simuler les paramètres d'une structure stratifiée

(30) Priority: 10.03.1997 US 814276
(43) Date of publication of application: 16.09.1998
(73) Proprietor: Jason Geosystems B.V., 3012 CN Rotterdam (NL)
(72) Inventor: Debeye, Hendrik Willem Johan, 3039 SR Rotterdam (NL); Sabbah, Eyad, 3062 LA Rotterdam (NL); Van der Made, Pieter Maarten, 3062 BS Rotterdam (NL)
(74) Representative: Land, Addick Adrianus Gosling

(56) References cited:
- FR-A- 2 710 418
- US-A- 5 539 704
- DOYEN PHILIPPE M: "Porosity from seismic data: a geostatistical approach" GEOPHYSICS OCT 1988, vol. 53, no. 10, October 1988 (1988-10), pages 1263-1275, XP002151187
- YANG C T ET AL: "Integrated geostatistical reservoir description using petrophysical, geological, and seismic data for Yacheng 13-1 gas field" PROCEEDINGS OF THE 1995 SPE ANNUAL TECHNICAL CONFERENCE & EXHIBITION;DALLAS, TX, USA OCT 22-25 1995, vol. OMEGA, 1995, pages 357-372, XP002151188 Richardson, TX, USA
- XU WENLONG ET AL: "Integrating seismic data in reservoir modeling: The collocated cokriging alternative" PROCEEDINGS OF THE 1992 SPE ANNUAL TECHNICAL CONFERENCE AND EXHIBITION;WASHINGTON, DC, USA OCT 4-7 1992, vol. OMEGA, 1992, pages 833-842, XP002151189 Proc SPE Annu Tech Conf Exhib;Proceedings - SPE Annual Technical Conference and Exhibition; Formation Evaluation and Reservoir Geology 1992 Publ by Soc of Petroleum Engineers of AIME, Richardson, TX, USA
- BEHRENS RONALD A ET AL: "Incorporating seismic attribute maps in 3D reservoir models" PROCEEDINGS OF THE 1996 SPE ANNUAL TECHNICAL CONFERENCE AND EXHIBITION. PART OMEGA;DENVER, CO, USA OCT 6-9 1996, vol. OMEGA, 1996, pages 31-36, XP002151190 Proc SPE Annu Tech Conf Exhib;Proceedings - SPE Annual Technical Conference and Exhibition; Formation Evaluation and Reservoir Geology 1996
- HIRSCHE KEITH ET AL: "Use and abuse of geostatistics" LEADING EDGE;LEADING EDGE (TULSA, OK) MAR 1997 SOC OF EXPLORATION GEOPHYSICISTS, TULSA, OK, USA, vol. 16, no. 3, March 1997 (1997-03), XP002151191

## Description

Particularly for locating oil and/or gas in the earth's crust it is important to obtain the best possible estimation of a stratum structure, for instance using seismic inversion techniques, whereafter it can be assessed whether (test) drilling for oil and/or gas can be carried out at a particular location on the earth's surface. Also after carrying out one or more test drillings, the costs of which are very high, examination of the stratum structure continues, likewise using the measurement data obtained from the wells.

In the article by André Haas et al: "Geostatistical Inversion - A Sequential Method of Stochastic Reservoir Modelling constrained by Seismic Data", First Break vol 12, No 11, November 1994/561, geostatical simulations are used at an earlier stage of the inversion process. This known computer scheme is however quite complicated, e.g. because it is necessary to calculate synthetic traces.

The present invention provides a method for estimating or simulating one or more parameters of a stratum structure, comprising the steps of:
- determining a first model of the stratum structure;
- determining one or more variograms of one or more parameters in one or more of the strata;
- measuring the value of a parameter in a number of points;
- estimating on the basis of a variogram a probability density function (PDF) of the parameter at locations in the strata close to or at some distance from the locations where the parameter has been measured; and
- determining by using seismic data an acceptable value of the parameter at the location where the probability density function of the parameter has been determined using a variogram.

According to the present invention geostatistical techniques are combined with deterministic techniques which make use of seismic data, whereby the uncertainty in the solution of the model can be considerably reduced.

The stratum structure is usually built up of sandstones, shale and/or limestone-type rocks. Significant parameters are for instance the specific density, the porosity, the permeability and the like of such strata. The first model of the stratum structure on which iterative (better) estimations are performed is determined for instance using seismic, geological and/or well data. The variogram of the parameter can be determined on the basis of the experience of a geologist, measurements on a well and/or from samples obtained from a well.

Further advantages, features and details of the present invention will be elucidated with reference to the annexed drawings, in which:
fig. 1 shows a diagram elucidating a preferred embodiment of the method according to the present invention;
fig. 2 shows a graph of a variogram for use in the preferred embodiment according to the present invention;
fig. 3 shows a graph of an example of a probability density function for use in the method according to the present invention;
fig. 4 shows a flow diagram explaining the preferred embodiment of the method according to the present invention;
fig. 5 shows a flow diagram explaining a further preferred embodiment of the method of the present invention; and
fig. 6 shows a flow diagram of a preferred embodiment wherein the methods according to fig. 4 and 5 are combined.

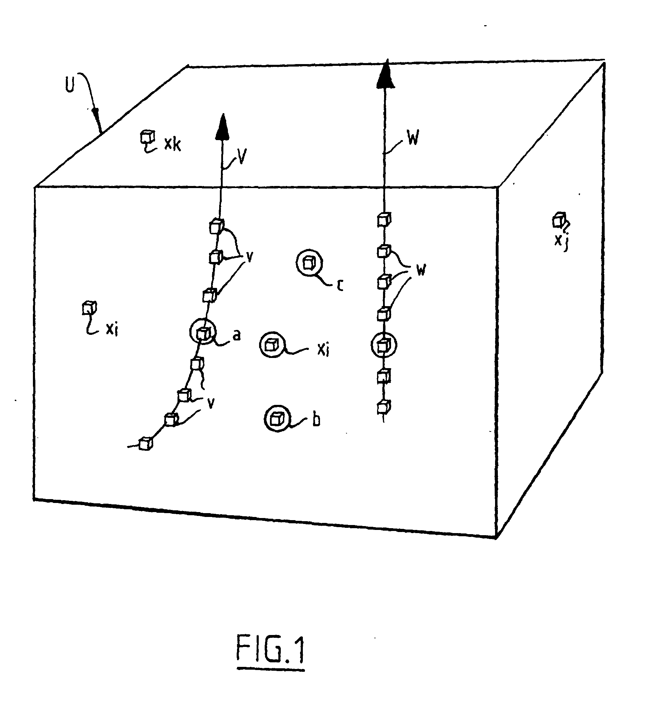

In a schematically designated area U (fig. 1) of a stratum structure, in which for instance two boreholes V and W are arranged, the parameter, for instance the porosity, must be determined of a large number of points - x, xᵢ, xⱼ and xₖ are shown - while the property of the structure at locations v and w at the respective boreholes V and W are known with a certain accuracy, for instance because measurements are carried out with probes along the boreholes and/or samples are taken.

In a preferred embodiment of the present invention a structural (geometric) model is first created on the basis of seismic measurement data at the earth's surface. Reflection surfaces which are considered important are formed to a structure of closed strata, for instance by the computer program EARTH MODEL commercially available from applicant, wherein a geologist can make determined choices. The program EARTH MODEL defines the geological layers as well as the micro-structure in such a layer. It will be apparent that according to the present invention other methods may also be envisaged to obtain an initial simulated stratum structure.

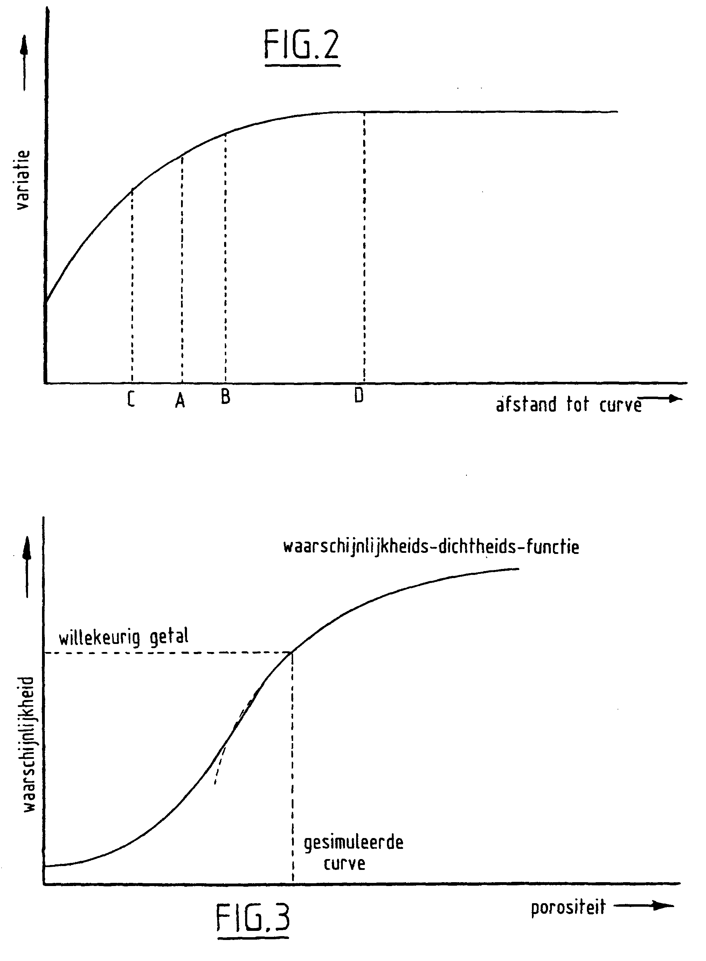

Variograms (fig. 2) (and/or histograms) are subsequently defined for a particular parameter, such as the porosity in determined layers. In a variogram such as in fig. 2 the correlation or variance is determined between two values of a parameter given at different spatial locations, i.e. as a function of the distance between two locations. A variogram between two different parameters, for instance between porosity and permeability, is referred to as a cross-variogram. At a determined distance the variogram becomes horizontal, above which distance the spatial correlation amounts to zero. The variance therefore has a constant value at a distance beyond this distance. In the case a variogram is anisotropic in a particular stratum, this distance has a different value in each case for different directions, thus forming as it were an ellipsoid.

In order to determine the parameter in the point x₁, which can be chosen randomly (or according to more advanced probability techniques which are not discussed here), a number of points, for instance a, b, c and d, where the value of this parameter is known (or is already present in the model and has been determined previously in the same manner) are chosen in the vicinity of this point x₁. Via the probability density function found on the basis of the variograms a value for the parameter is chosen randomly and stored for the point x₁. The thus simulated point is added to the known value and the procedure is repeated until all points xᵢ in the space U have been simulated and a value assigned thereto.

The above stated preferred method differs from the so-called Kriging method (or in the case of cross-variograms co-Kriging) in that therein the most probable value is determined from the variograms (see C.V. Deutsch and A.G. Journel (1992), GSLIB: geostatistical software library and user's guide, Oxford University Press, New York).

In the stochastic techniques an estimation of the uncertainty in the estimated model reservoir is available, wherein the reservoir models fit available geostatistical information, such as variograms and histograms (i.e. wherein the data has a Gaussian distribution).

According to the present invention the models, such as obtained with the above mentioned stochastic simulation, are subsequently checked against seismic data. Instead of the parameters being estimated exclusively according to stochastic simulations, after obtaining a first stochastic model it is determined using seismic data whether or not a new iteration point fits better in the model than the previously found point.

This takes place by convoluting synthetic seismic data with a "wavelet" and comparing the outcome with the measured seismic data. If the value of the iteration point is no better than the previous point, this iteration step is rejected and the old value of the point is stored in the model.

Due to the combination of stochastic simulation and application of seismic data, wherein iterations can continue until a satisfactory correlation between the reservoir model and the seismic data is obtained, there results an estimation or model for the values of the parameters in the various points which suffice optimally on the basis of the geostatistical data.

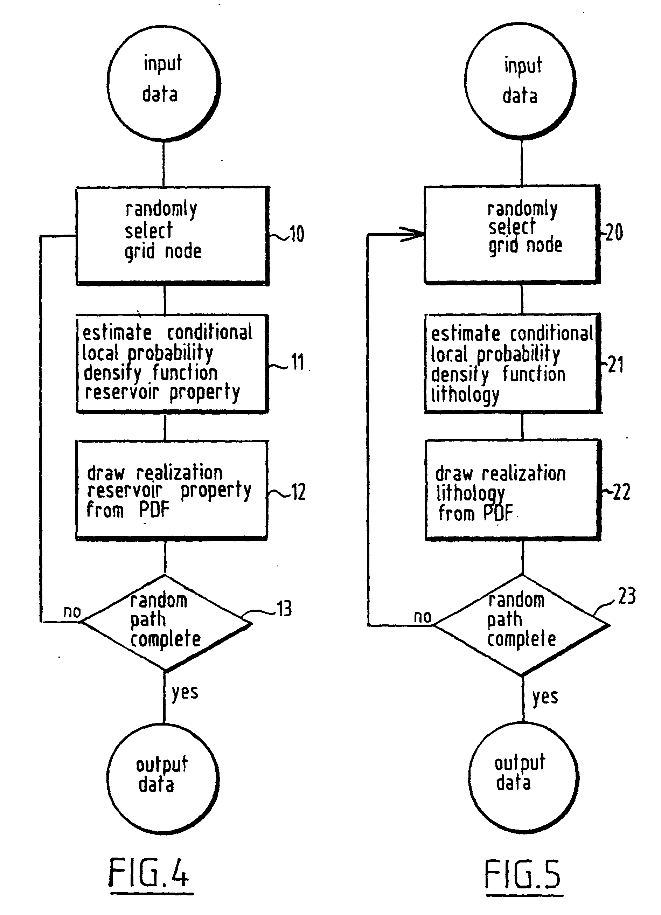

In the flow diagram according to fig. 4 various aspects are elucidated further: firstly (10) a point or node xᵢ is selected randomly. The conditional local probability density function of the reservoir property is then estimated (11); the realization is drawn therefrom (12), which procedure is repeated until all grid nodes are dealt with.

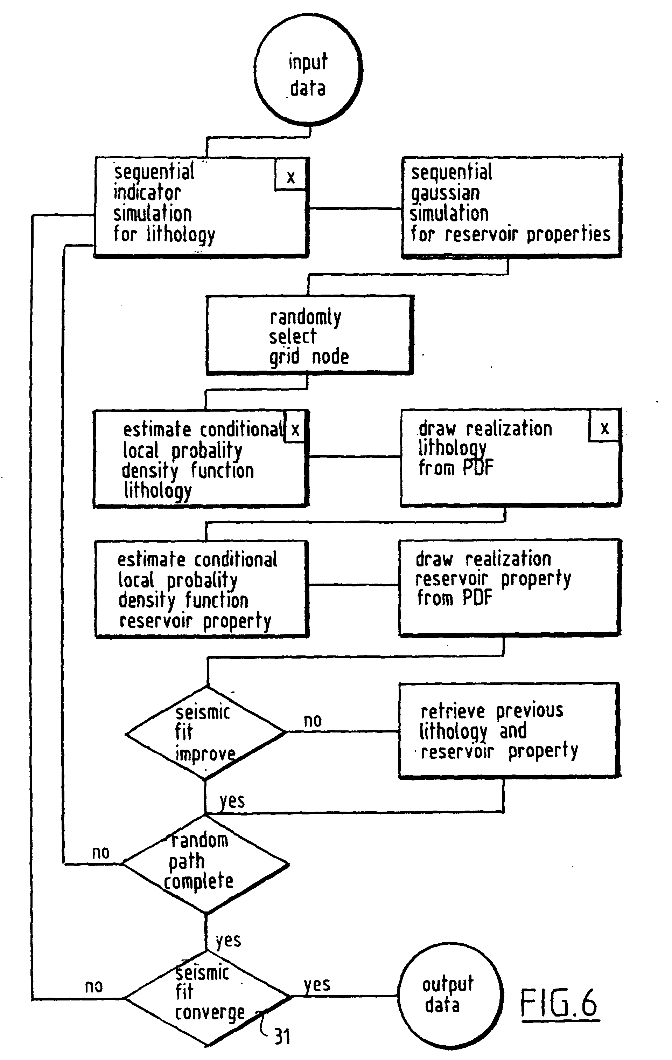

In fig. 5 a similar method is shown wherein firstly a grid node (20) is selected at random, the conditional local probability density function is then determined subject to a particular lithology (indicator) (21), whereafter the realization lithology from the local probability density function is drawn (22) until the random path (23) is complete.

Fig. 6 shows the preferred embodiment, wherein the procedures of fig. 4 and 5 are combined and wherein the convergence step for the seismic data is shown in block 31.

First experiments with the method according to the present invention have shown that the cumulative probability in the 10/90% probability interval is considerably smaller in the method according to the present invention than using the known geostatistical methods.

The present invention is not limited to the above described preferred embodiment; the requested rights are determined by the following claims, within the scope of which many modifications can be envisaged.

## Claims

1. A method for estimating or simulating one or more parameters of a stratum structure, comprising the steps of:
a) obtaining seismic data of the stratum structure;
b) determining from the obtained seismic data a first model of the stratum structure;
c) determining one or more variograms of one or more parameters in one or more strata of the stratum structure;
d) measuring a value for the one or more parameters at a plurality of points in the stratum structure;
e) estimating on the basis of the one or more variograms a probability density function (PDF) of said one or more parameters at other points in the strata adjacent to or distant from the points where said one or more parameters were measured; and
f) determining by using the probability density function a value for each of said one or more parameters in the strata at the points where the probability density function of the parameters were determined;
g) combining the values determined in step f) with said corresponding one or more parameters determined from the model;
h) obtaining from said one or more parameters determined in step g) acceptable values for said one or more parameters in the stratum structure; and
i) generating from the acceptable values for said one or more parameters a new model.
j) repeating the steps (d) - (i) until an estimation is obtained of desired accuracy.

2. A method as claimed in claim 1, wherein for each location two parameters are simulated using a cross-variogram.

3. A method as claimed in claim 1 or 2, wherein the probability density function is selected on the basis of an indicator for the type of lithology to be expected.

4. A method as claimed in claims 1-3, wherein the one or more variograms are determined on the basis of available data of a stratum obtained from samples thereof.

5. A method as claimed in claims 1-4, wherein one or more parameters are measured in a borehole.

6. The method as claimed in claim 1, wherein step (h) comprises the steps of:
convoluting the one or more parameters determined in step (g) with a wavelet to obtain convoluted one or more parameters;
comparing the convoluted one or more parameters with corresponding one or more parameters determined from the previous model; and
retaining the obtaining convoluted one or more parameters as the acceptable values if the obtained convoluted one or more parameters improve a cumulative probability of the probability density function over the one or more parameters from the previous model.

## Patentansprüche

1. Verfahren zum Schätzen oder Simulieren von einem oder mehreren Parametern einer Schicht-Struktur, mit den Schritten:
a) Erzielen von seismischen Daten der Schicht-Struktur;
b) Bestimmen eines ersten Modells der Schicht-Struktur aus den erzielten seismischen Daten;
c) Bestimmen von einem oder mehreren Variogrammen von einem oder mehreren Parametern in einer oder mehreren Schichten der Schicht-Struktur;
d) Messen eines Wertes für einen oder mehrere Parameter an einer Anzahl von Punkten in der Schicht-Struktur;
e) Schätzen einer Wahrscheinlichkeits-Dichtefunktion (PDF) des einen oder der mehreren Parameter an anderen Punkten in der Schicht in der Nähe oder mit Abstand zu den Punkten, an welchen einer oder mehrere Parameter gemessen worden sind auf der Basis von dem einem oder mehreren Variogrammen; und
f) Bestimmen eines Wertes für jeden der einen oder mehreren Parameter in der Schicht unter Verwendung der Wahrscheinlichkeits-Dichtefunktion an den Punkten, wo die Wahrscheinlichkeits-Dichtefunktion der Parameter bestimmt worden ist;
g) Kombinieren der im Schritt f) bestimmten Werte mit dem oder den entsprechenden einen oder mehreren Parameter, die aus dem Modell bestimmt worden sind;
h) Erzielen akzeptabler Werte für den einen oder die mehreren Parameter in der Schicht-Struktur aus dem einen oder den mehreren Paramentern, die in dem Schritt g) bestimmt worden sind; und
i) Erzeugen eines oder mehrerer Parameter eines neuen Modells aus den akzeptablen Werten für den einen oder die mehreren Parameter;
j) Wiederholen der Schritte d) bis i), bis eine Schätzung mit gewünschter Genauigkeit erzielt worden ist.

2. Verfahren nach Anspruch 1, wobei für jeden Ort unter Verwendung eines Kreuz-Variogramms zwei Parameter simuliert werden.

3. Verfahren nach Anspruch 1 oder 2, wobei die Wahrscheinlichkeits-Dichtefunktion auf der Basis eines Indikators für den zu erwartenden Gesteinskundetyp gewählt wird.

4. Verfahren wie in den Ansprüchen 1 bis 3 beansprucht, wobei auf der Basis zur Verfügung stehender Daten einer Schicht-Struktur, die aus Proben derselben erzielt worden sind, ein oder mehrere Variogramme bestimmt werden.

5. Verfahren wie in den Ansprüchen 1 bis 4 beansprucht, wobei einer oder mehrere Parameter in einem Bohrloch gemessen werden.

6. Verfahren nach Anspruch 1, wobei der Schritt (h) die Schitte aufweist: Verschachteln des einen oder mehrerer Parameter, die im Schritt (g) bestimmt worden sind, mit einer Elementarwelle, um einen oder mehrere verschachtelte Parameter zu erhalten;
Vergleichen des verschachtelten einen oder mehrerer Parameter mit dem entsprechenden einen oder mehreren Parameter, die aus dem vorhergehenden Modell bestimmt worden sind; und
Halten des oder der erzielten, verschachtelten Parameter als die akzeptablen Werte, wenn der oder die erzielten, verschachtelten einen oder mehreren Parameter eine kumulative Wahrscheinlichkeit der Wahrscheinlichkeits-Dichtefunktion über einen oder mehrere Parametern aus dem vorhergehenden Modell verbessern.

## Revendications

1. Procédé pour estimer ou simuler un ou plusieurs paramètres d'une structure stratifiée comprenant les étapes consistant à:
a) obtenir des données sismiques de la structure stratifiée;
b) déterminer à partir des données sismiques obtenues, un premier modèle de la structure stratifiée;
c) déterminer un ou plusieurs variogrammes d'un ou de plusieurs paramètres dans une ou plusieurs strates de la structure stratifiée;
d) mesurer une valeur pour le paramètre ou la pluralité de paramètres en une pluralité de points dans la structure stratifiée;
e) estimer, sur la base du variogramme ou de la pluralité de variogrammes, une fonction de densité de probabilité (PDF) dudit paramètre ou de ladite pluralité de paramètres en d'autres points dans les strates adjacents ou distants des points où ledit paramètre ou ladite pluralité de paramètres ont été mesurés; et
f) déterminer, en utilisant la fonction de densité de probabilité, une valeur pour ledit paramètre ou chacun de ladite pluralité de paramètres dans les strates au niveau des points où la fonction de densité de probabilité des paramètres a été déterminée;
g) combiner les valeurs déterminées lors de l'étape f) audit paramètre correspondant ou à ladite pluralité de paramètres correspondants, déterminés à partir du modèle;
h) obtenir à partir dudit paramètre ou de ladite pluralité de paramètres, déterminés lors de l'étape g), des valeurs acceptables pour ledit paramètre ou ladite pluralité de paramètres dans la structure stratifiée; et
i) produire à partir des valeurs acceptables pour ledit paramètre ou ladite pluralité de paramètres un nouveau modèle;
j) répéter les étapes (d)-(i) jusqu'à obtenir une estimation de la précision désirée.

2. Procédé selon la revendication 1, selon lequel pour chaque emplacement, deux paramètres sont simulés en utilisant un variogramme transversal.

3. Procédé selon la revendication 1 ou 2, selon lequel la fonction de densité de probabilité est sélectionnée sur la base d'un indicateur pour le type de lithologie à laquelle on doit s'attendre.

4. Procédé selon les revendications 1 à 3, selon lequel le variogramme ou la pluralité de variogrammes sont déterminés sur la base des données disponibles d'une strate obtenues à partir d'échantillons de cette dernière.

5. Procédé selon les revendications 1 à 4, selon lequel un ou plusieurs paramètres sont mesurés dans un trou de sondage.

6. Procédé selon la revendication 1, selon lequel l'étape (h) comprend les étapes consistant à:
former la convolution du paramètre ou de la pluralité de paramètres déterminés lors de l'étape (g) avec une ondelette pour obtenir un ou plusieurs paramètres traités par convolution;
comparer le paramètre ou la pluralité de paramètres traités par convolution à un ou plusieurs paramètres correspondants déterminés à partir du modèle antérieur; et
retenir le paramètre ou la pluralité de paramètres traités par convolution en tant que valeurs acceptables si le paramètre ou la pluralité de paramètres traités par convolution améliorent une probabilité cumulée de la fonction de densité de probabilité pour le paramètre ou la pluralité de paramètres à partir du modèle antérieur.
